# EUROPÄISCHE PATENTSCHRIFT

(11) **EP 1 703 146 B1**
(45) Veröffentlichungstag und Bekanntmachung des Hinweises auf die Patenterteilung: **25.02.2015**
(21) Anmeldenummer: 06005191.9
(22) Anmeldetag: 14.03.2006
(51) Int. Cl.: F16F 15/08, F16B 21/08

(54) **Schwingungsdämpfende Lagerung**
Vibration damping support
Support amortisseur de vibrations

(30) Priorität: 15.03.2005 DE 202005004271 U
(43) Veröffentlichungstag der Anmeldung: 20.09.2006
(73) Patentinhaber: ebm-papst Landshut GmbH, 84030 Landshut (DE)
(72) Erfinder: Tungl, Rudolf, 84030 Ergolding (DE); Keber, Roland, Dr., 84109 Wörth a.d. Isar (DE)
(74) Vertreter: Sperling, Rüdiger

(56) Entgegenhaltungen:
- WO-A1-01/92752
- DE-U- 1 973 723
- DE-U1- 8 811 934
- DE-U1- 20 109 332
- FR-A- 2 098 600
- FR-A1- 2 762 885
- US-A- 2 951 674
- US-A- 3 319 918
- US-A- 5 277 554

## Beschreibung

Die Erfindung betrifft eine schwingungsdämpfende Lagerung eines Motors auf einem Untergrund gemäß dem Oberbegriff des Anspruchs 1.

Aus der EP 1 265 022 A2 ist eine gattungsgemäße Aufhängung bekannt. Diese weist eine hülsenförmige Tülle von im wesentlichen säulenförmiger Gestalt mit jeweils einer oberen und unteren Öffnung für den Durchtritt eines Befestigungsbolzens auf. Der Befestigungsbolzen ist am Untergrund festgelegt. Die Tülle ist in einer im unteren Bereich des Befestigungsbolzens ausgebildeten Rinne festgelegt. An seinem oberen Endabschnitt weist der Befestigungsbolzen eine pilzförmige Kappe auf, deren größter Durchmesser größer ist als die lichte Weite der oberen Öffnung der Tülle.,

Der Erfindung liegt die Aufgabe zugrunde, eine schwingungsdämpfende Lagerung eines Elektromotors auf einem Untergrund zu schaffen, die bei einfachem Aufbau kostengünstig montierbar ist.

Die Aufgabe wird bei einer gattungsgemäßen Lagerung gemäß Oberbegriff dadurch gelöst, dass der Hohlraum (5') des Elements (5) an seinem der Aufnahme (4) zugewandten Endabschnitt (9) geschlossen und an dem motorseitigen Endabschnitt (6) des Hauptteils offen ist, der dem Untergrund (2) zugewandte Endabschnitt (9) des Elements (5) formschlüssig in der als Sockel (11) ausgebildeten Aufnahme (4) des Untergrunds (2) gehalten ist, wobei die Gestalt des Endabschnitts (9) zumindest abschnittsweise der inneren, zylindrischen Form des Sockels (11) entspricht,
und der dem Untergrund (2) zugewandte Endabschnitt (9) gegenüber dem übrigen Hauptteil (15) des Elements (5) einen geringeren Querschnitt aufweist,
so dass der Hauptteil eine über den Sockel (11) hinausreichende Schulter für eine Auflage (10) des Sockels (11) am Element (5) bildet.
Dadurch, dass der Endabschnitt in den Sockel eingesetzt und in ihm gehalten ist, erübrigen sich zusätzliche Bauteile, so dass sich ein Kostenvorteil sowie eine einfache Montage ergeben.

Die Gestalt des Endabschnitts entspricht zumindest abschnittsweise der inneren, zylindrischen Form des Sockels. Durch die formschlüssige Anlage in dem zylindrischen Hohlraum des Sockels ergibt sich eine feste Halterung des Elements und somit eine stabile Lagerung.

Eine günstige Ausbildungsform ergibt sich bei einer schwingungsdämpfenden Lagerung mit am motorseitigen Abschnitt des Elements angeordneter erster formschlüssiger Sicherung und einer ersten Auflage für die Halterung dann, wenn eine zweite formschlüssige Sicherung als eine Nut in der Wand des Elements ausgebildet ist. Dabei kann es günstig sein, dass eine Wand der Nut eine Auflage zur Abstützung auf dem Untergrund bildet.

Eine vorteilhafte Ausgestaltung ergibt sich dadurch, dass die jeweiligen Endabschnitte des Elements mit einem Konus ausgebildet sind. Hierdurch ist ein einfaches und schnelles Einknöpfen des Elements in die Halterung bzw. den Sokkel gewährleistet.

Ein weiterer Vorteil der Erfindung ergibt sich darin, dass der dem Untergrund zugewandte Endabschnitt gegenüber dem übrigen Hauptteil des Elements einen geringeren Querschnitt aufweist. Hierdurch erleichtert sich zum einen das Einsetzen, und zum anderen ergibt sich daraus eine Materialeinsparung.

Von besonderem Vorteil kann es sein, dass die Aufnahme am Untergrund zumindest ein Stützauflager ausweist, das in die Nut eingreift.

Günstig kann dabei sein, dass die Nut als Ringnut ausgebildet ist und das Stützauflager zumindest eine kreisförmige Rippe aufweist.

Von besonderem Vorteil ist es, dass der Hohlraum des elastischen Elements sich vom Hauptteil bis in den Endabschnitt erstreckt.

Hierdurch ergeben sich besonders günstige Dämpfungseigenschaften, insbesondere auch dann, wenn der Endabschnitt über weite Bereiche seines Außenumfangs oder Stirnflächen im Inneren des Sockels anliegt.

Im folgenden werden Ausführungsbeispiele der Erfindung in Verbindung mit den Figuren näher beschrieben. Es zeigen:
- Fig. 1: eine Schnittansicht durch die Lagerung, und
- Fig. 2: eine Schnittansicht durch eine andere Lagerungsausführung.

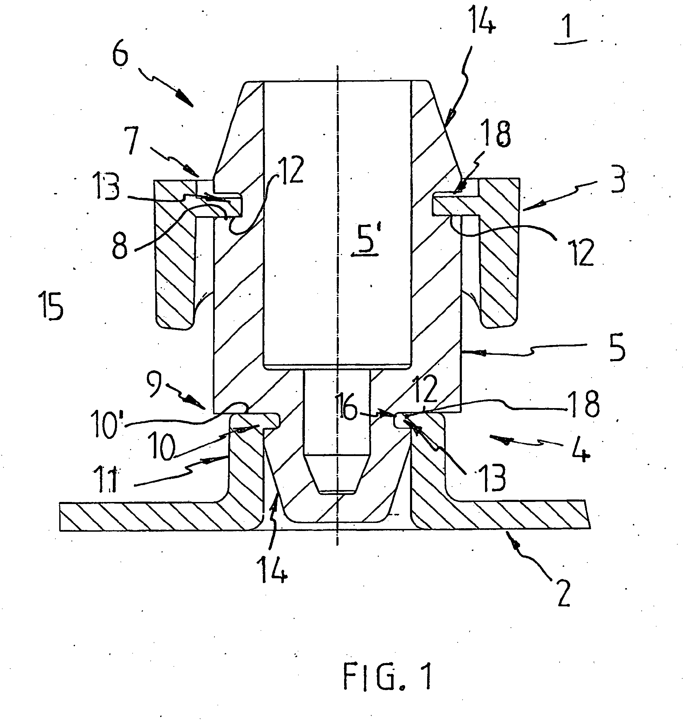

Die in Fig. 1 dargestellte schwingungsdämpfende Lagerung 1 eines nicht dargestellten Motors auf einem Untergrund 2 weist eine motorseitige Halterung 3 auf. Diese motorseitige Halterung 3 kann beispielsweise an einer Lagerschale eines Elektromotors angreifen. Auf dem Untergrund ist ein Sockel 11 angeordnet, der einen Endabschnitt 9 des Elements 5 formschlüssig umschließt und hält. Der Hohlraum 5' des Elements 5 ist an seinem der Aufnahme 4 des Untergrunds 2 zugewandten Endabschnitt 9 geschlossen. Die Gestalt des Endabschnitts 9 entspricht zumindest abschnittsweise der inneren Form des Sockels 11. Der Sockel 11, bei dem es sich um einen entsprechend geformten angegossenen gossenen oder in anderer Weise angeformten Vorsprung handeln kann, weist in dem dargestellten Ausführungsbeispiel eine zylindrische Form auf. Das Element 5 mit dem Hohlraum 5' weist allgemein die Form einer Tülle auf und besitzt an seinem motorseitigen Abschnitt 6 eine erste formschlüssige Sicherung 7 und eine erste Auflage 8 für die Halterung 3 des Motors. Bei der formschlüssigen Sicherung handelt es sich um eine Nut 13, wobei die Auflage 8 für die Halterung 3 eine Seitenwand 12 der Nut ist. Eine zweite formschlüssige Sicherung 10 ist als eine weitere Nut 13 in der Wand des Elements 5 Im unteren, dem Untergrund zugewandten Abschnitt des Elements ausgebildet. Dabei bildet ebenfalls eine Seitenwand 12 der Nut 13 eine Auflage 10' für den Untergrund.

Der dem Untergrund 2 zugewandte Endabschnitt 9 weist gegenüber dem übrigen Hauptteil 15 des Elements 5 einen geringeren Querschnitt auf. Hierdurch ergibt sich eine besonders breite Schulter für die Auflage 10 am Element 5. Die Aufnahme 4 am Untergrund besitzt ein Stützauflager 16, das bei dem dargestellten Ausführungsbeispiel an dem Sockel 11 angeordnet ist und in die Nut 13 eingreift. Die jeweilige Nut 13 ist bei dem dargestellten Ausführungsbeispiel als Ringnut ausgebildet, wobei das Stützauflager 16 und auch die Halterung 3 am oberen Abschnitt jeweils eine kreisförmige Rippe 18 aufweisen. Die jeweiligen Endabschnitte 6 bzw. 9 des Elements 5 sind mit einem Konus 14 ausgebildet. Bei einer nicht dargestellten Ausführungsform kann vorgesehen sein, dass zumindest der Konus am unteren Abschnitt durch einen den zylindrischen Innenraum des Sockels 11 vollständig ausfüllenden Zylinderabschnitt ersetzt ist. Hierdurch ist es möglich, den Untergrund, der in der Regel von einem Gehäuseteil gebildet wird, an dieser Stelle mit einer Öffnung zu belassen, die nach dem Einsetzen des Elements im wesentlichen druck- oder luftdicht verschlossen ist.

Bei dem dargestellten Ausführungsbeispiel erstreckt sich der Hohlraum 5' des elastischen Elements vom Hauptteil 15 bis in den Endabschnitt 9 hinein.

Die Erfindung ist nicht auf die in dem vorangegangenen Ausführungsbeispiel beschriebenen Merkmale beschränkt. So ist es beispielsweise möglich, die Nuten 13 nicht ringförmig, sondern lediglich über einen vorbestimmten Abschnitt anzubringen, wobei die Wandstärke der Tülle abweichend von der zeichnerischen Darstellung in Fig. 1 entsprechend variieren kann.

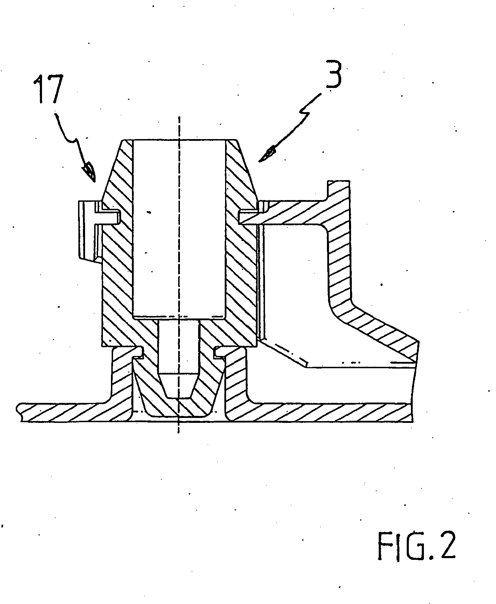

In Fig.2 ist eine weitere Ausführungsform der Lagerung dargestellt. Bei dieser Ausführungsform ist die Halterung 3 mit einem Schlitz 17 ausgestattet, der es ermöglicht, das elastische Element 3 in die Halterung einzuschieben, anstatt es durch eine Halterungsöffnung zu drücken.

### Bezugszeichenliste:

- 1: schwingungsdämpfende Lagerung
- 2: Untergrund
- 3: motorseitige Halterung
- 4: Aufnahme am Untergrund
- 5: elastisches Element
- 5': Hohlraum
- 6: motorseitiger Abschnitt
- 7: formschlüssige Sicherung
- 8: erste Auflage
- 9: Endabschnitt in Richtung Untergrund
- 10: zweite Sicherung
- 10': zweite Auflage
- 11: Sockel
- 12: Seitenwand der Nut
- 13: Nut
- 14: Konus
- 15: Hauptteil
- 16: Stützauflager
- 17: Schlitz
- 18: kreisförmige Rippen

## Patentansprüche

1. Schwingungsdämpfende Lagerung (1) eines Motors auf einem Untergrund (2), mit einer motorseitigen Halterung (3), einer am Untergrund angeordneten Aufnahme (4) und einem elastischen Element (5), welches einen dem Untergrund zugewandten Endabschnitt (9) und einen Hauptteil (15) sowie einen Hohlraum (5') aufweist und zwischen der Halterung (3) und der Aufnahme (4) angeordnet ist, wobei der Hauptteil (15) einen zylindrischen Teilbereich und einen motorseitigen Endabschnitt (6) aufweist, **dadurch gekennzeichnet, dass** der Hohlraum (5') des Elements (5) an seinem der Aufnahme (4) zugewandten Endabschnitt (9) geschlossen und an dem motorseitigen Endabschnitt (6) des Hauptteils offen ist,
der dem Untergrund (2) zugewandte Endabschnitt (9) des Elements (5) formschlüssig in der als Sockel (11) ausgebildeten Aufnahme (4) des Untergrunds (2) gehalten ist, wobei die Gestalt des Endabschnitts (9) zumindest abschnittsweise der inneren, zylindrischen Form des Sockels (11) entspricht,
und dass der dem Untergrund (2) zugewandte Endabschnitt (9) gegenüber dem übrigen Hauptteil (15) des Elements (5) einen geringeren Querschnitt aufweist,
so dass der Hauptteil eine über den Sockel (11) hinausreichende Schulter für eine Auflage (10) des Sockels (11) am Element (5) bildet.

2. Lagerung nach Anspruch 1, mit am motorseitigen Abschnitt (6) des Elements angeordneter erster formschlüssigen Sicherung (7) und einer ersten Auflage (8) für die Halterung (3), **dadurch gekennzeichnet, dass** eine zweite formschlüssige Sicherung (10) als eine Nut (13) in der Wand des Elements (5) ausgebildet ist.

3. Lagerung nach einem der vorangehenden Ansprüche, **dadurch gekennzeichnet, dass** eine Seitenwand (12) der Nut (13) eine Auflage (10') für den Untergrund (2) bildet.

4. Lagerung nach einem der vorangehenden Ansprüche, **dadurch gekennzeichnet, dass** die Aufnahme (4) am Untergrund (2) zumindest ein Stützauflager (16) aufweist.

5. Lagerung nach Anspruch 4, **dadurch gekennzeichnet, dass** das Stützauflager (16) an dem Sockel (11) angeordnet ist und in die Nut (13) eingreift.

6. Lagerung nach einem der vorangehenden Ansprüche 2 - 5, **dadurch gekennzeichnet, dass** die Nut (13) als Ringnut ausgebildet ist und das Stützauflager (16) zumindest eine kreisförmige Rippe (18) aufweist.

7. Lagerung nach einem der vorangehenden Ansprüche, **dadurch gekennzeichnet, dass** die jeweiligen Endabschnitte (6; 9) des Elements (5) mit einem Konus (14) ausgebildet sind.

8. Lagerung nach einem der vorangehenden Ansprüche, **dadurch gekennzeichnet, dass** der Hohlraum (5') des elastischen Elements (5) sich vom Hauptteil (15) bis in den Endabschnitt (9) erstreckt.

9. Lagerung nach einem der vorangehenden Ansprüche, **dadurch gekennzeichnet, dass** die Halterung (3) mit einem Schlitz (17) ausgestattet ist, der es ermöglicht, das elastische Element (3) von der Seite in die Halterung einzuschieben.

## Claims

1. A vibration-damping mounting (1) of a motor on a support (2), comprising a holding means (3) at the motor side, a receiving means (4) arranged at the support and an elastic element (5) having an end portion (9) facing the support and a main portion (15) as well as a cavity (5') and being arranged between the holding means (3) and the receiving means (4), wherein the main portion (15) has a cylindrical part and a portion (6) towards the motor, **characterized in that** the cavity (5') of the element (5) is closed at its end portion (9) facing the receiving means (4) und being open at the portion (6) towards the motor of the main portion,
the end portion (9) of the element (5) facing the support (2) is retained form-fit in the receiving means (4) of the support (4) being formed as a holder socket (11), wherein the shape of the end portion (9) corresponds at least in portionwise manner to the inner cylindrical shape of the holder socket (11), and that the end portion (9) facing the support (2) is of a smaller cross-section than the remaining main portion (15) of the element (5), so that the main portion forms a shoulder for a supporting means (10) of the holder socket (11) at the element (5) which protrudes over the holder socket (11).

2. A mounting according to claim 1, comprising a first positively locking securing means (7) at the portion (6) towards the motor and a first supporting means (8) for the holding means (3), **characterized in that** a second positively locking securing means (10) is formed as a groove in the wall of the element (5).

3. A mounting according to one of the previous claims, **characterized in that** the groove (13) has a side wall (12) forming a supporting means (10') for the support (2).

4. A mounting according to one of the previous claims, **characterized in that** the receiving means (4) on the support (2) has at least one support mounting means (16).

5. A mounting according to claim 4, **characterized in that** the support mounting means (16) is arranged at the holder socket (11) and engages into the groove (13).

6. A mounting according to one of the previous claims 2 to 5, **characterized in that** the groove (13) is in the form of an annular groove and the support mounting means (16) has at least one circular rib (18).

7. A mounting according to one of the previous claims, **characterized in that** the respective end portions (6, 9) of the element (5) are formed with a taper (14).

8. A mounting according to one of the previous claims, **characterized in that** the cavity (5') of said element (5) extends from the main portion (15) thereof into said end portion (9).

9. A mounting according to one of the previous claims, **characterized in that** the holding means (3) has a slot (17) adapted to permit the elastic element (5) to be inserted from the side into the holding means.

## Revendications

1. Support amortisseur de vibrations (1) d'un moteur sur un support (2), comprenant un moyen de maintien (3) sur le côté du moteur, un moyen de réception (4) disposés au niveau du support et un élément élastique (5) comportant une partie d'extrémité (9) faisant face au support et une partie principale (15) ainsi qu'une cavité (5') et étant disposé entre le moyen de maintien (3) et le moyen de réception (4), dans lequel la partie principale (15) comporte une partie cylindrique et une partie (6) en direction du moteur, **caractérisé en ce que** la cavité (5 ') de l'élément (5) est fermé à sa partie d'extrémité (9) faisant face au moyen de réception (4) et est ouvert à la partie (6) en direction du moteur de la partie principale,
la partie d'extrémité (9) de l'élément (5) faisant face au support (2) est retenu par complémentarité de forme dans le moyen de réception (4) du support (2) qui est formé comme une douille de support (11), dans lequel la forme de la partie d'extrémité (9) correspond au moins par passages de manière à la forme intérieure cylindrique de la douille de support (11),
et que la partie d'extrémité (9) faisant face au support (2) ayant une section transversale plus petite que la partie principal restant (15) de l'élément (5), de sorte que la partie principale forme un épaulement pour un moyen de support (10) pour la douille de support (11) à l'élément (5) qui fait saillie au-dessus de la douille de support (11).

2. Support selon la revendication 1, comprenant un premier moyen de fixation à forme finale (7) à la partie (6) en direction du moteur et un premier moyen de support (8) pour le moyen de maintien (3), **caractérisé en ce qu'**une seconde moyen de fixation (10) en forme finale est formé comme une rainure dans la paroi de l'élément (5).

3. Support selon l'une quelconque des revendications précédentes, **caractérisé en ce que** la rainure (13) a une paroi latérale (12) formant un moyen de support (10') pour le support (2).

4. Support selon l'une quelconque des revendications précédentes, **caractérisé en ce que** le moyen de réception (4) sur le support (2) présente au moins un support de moyen de montage (16).

5. Support selon la revendication 4, **caractérisé en ce que** le moyen de support de montage (16) est disposé à la douille de support (11) et se engage dans la rainure (13).

6. Support selon l'une des revendications précédentes 2 à 5, **caractérisé en ce que** la rainure (13) est sous la forme d'une rainure annulaire et le support du moyen de montage (16) présente au moins une nervure circulaire (18).

7. Support selon l'une quelconque des revendications précédentes, **caractérisé en ce que** les parties d'extrémité respectives (6, 9) de l'élément (5) sont formés avec une conicité (14).

8. Support selon l'une quelconque des revendications précédentes, **caractérisé en ce que** la cavité (5 ') dudit élément (5) se étend depuis la partie principale (15) dans ladite partie d'extrémité (9).

9. Support selon l'une quelconque des revendications précédentes, **caractérisé en ce que** le moyen de maintien (3) présente une fente (17) adaptée pour permettre à l'élément élastique (5) pour être inséré par le côté dans le moyen de maintien.
